(19) Europäisches Patentamt
European Patent Office
Office européen des brevets

(11) Veröffentlichungsnummer: **0 158 110**
**B1**

(12) # EUROPÄISCHE PATENTSCHRIFT

(45) Veröffentlichungstag der Patentschrift: **01.06.88**

(51) Int. Cl.⁴: **C 09 B 62/002**, C 09 B 19/00, D 06 P 1/38

(21) Anmeldenummer: **85102448.9**

(22) Anmeldetag: **05.03.85**

(54) **Triphendioxazinfarbstoffe.**

(30) Priorität: **15.03.84 DE 3409439**

(43) Veröffentlichungstag der Anmeldung: **16.10.85 Patentblatt 85/42**

(45) Bekanntmachung des Hinweises auf die Patenterteilung: **01.06.88 Patentblatt 88/22**

(84) Benannte Vertragsstaaten: **CH DE FR GB LI**

(56) Entgegenhaltungen:
**EP - A - 0 015 232**
**EP - A - 0 053 743**
**US - A - 2 355 497**

(73) Patentinhaber: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen 1 (DE)**
Erfinder: **Wunderlich, Klaus, Dr., Carl-Rumpff-Strasse 21, D-5090 Leverkusen 1 (DE)**
Erfinder: **Jäger, Horst, Dr., Carl-Rumpff-Strasse 37, D-5090 Leverkusen 1 (DE)**

**EP 0 158 110 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind Farbstoffe der Formel

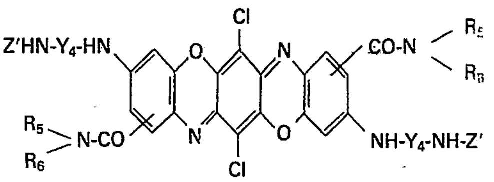

(I)

worin

$Y_4$ = gegebenenfalls substituiertes $C_2$–$C_6$-Alkylen, Cyclohexylen

Z' = heterocyclischer faserreaktiver Rest

$R_5$ = H, gegebenenfalls substituiertes $C_1$–$C_6$-Alkyl,

$R_6$ = H, gegebenenfalls substituiertes $C_1$–$C_6$-Alkyl, $C_5$–$C_6$-Cycloalkyl, gegebenenfalls substituiertes Phenyl-$C_1$–$C_4$-alkyl, gegebenenfalls substituiertes Aryl, vorzugsweise gegebenenfalls substituiertes Phenyl und Naphthyl, gegebenenfalls substituiertes $C_1$–$C_4$-Alkyl-, Phenyl-$C_1$–$C_4$-alkyl-, Phenyl- oder Naphthylsulfonyl,

wobei $R_5$ und $R_6$ zusammen auch einen gegebenenfalls durch O oder N unterbrochenen $C_4$–$C_5$-Alkylenrest bedeuten können.

Bevorzugt sind dabei Farbstoffe der Formel

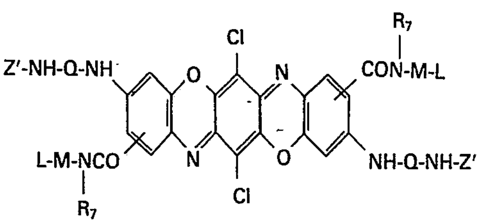

(II)

worin

$R_7$ = H, $-CH_3$, $-CH_2$-$CH_2$-$SO_3H$, $-CH_2$-$CH_2$-$OSO_3H$, $-CH_2$- $CH_2OH$, $-CH_2$-COOH

M = $C_1$–$C_6$-Alkylen

L = $SO_3H$, $OSO_3H$, OH, COOH

Q = $C_2$–$C_6$-Alkylen

und der Formel

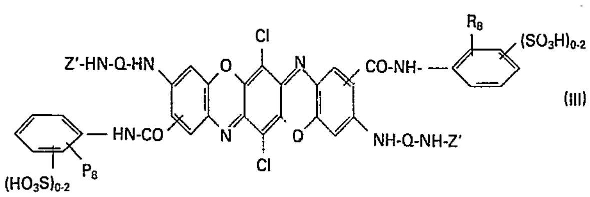

(III)

worin

$R_8$ = H, $CH_3$, Cl, $OCH_3$.

Gegenstand der Erfindung ist weiterhin die Verwendung der Farbstoffe der Formeln I–III zum Färben natürlicher und synthetischer hydroxyl- oder amidgruppenhaltiger Materialien sowie die mit diesen Farbstoffen gefärbten natürlichen oder synthetischen hydroxyl- oder amidgruppenhaltigen Materialien.

Gegenstand der Erfindung sind weiterhin reaktivgruppenfreie Farbstoffe der Formel

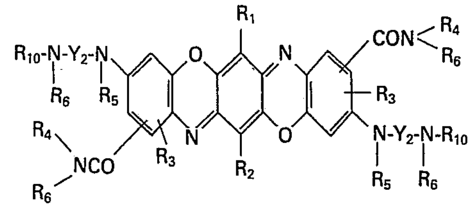

(IV)

worin

$R_{10}$ = H oder Rest einer Reaktivgruppen-freien Sulfonsäure oder Carbonsäure

$Y_2$ = Brückenglied

$R_5$ = H, gegebenenfalls substituiertes $C_1$–$C_6$-Alkyl,

$R_4$, $R_6$ = H, gegebenenfalls substituiertes $C_1$–$C_6$-Alkyl, $C_5$–$C_6$-Cycloalkyl, gegebenenfalls substituiertes Phenyl-$C_1$–$C_4$-alkyl, gegebenenfalls substituiertes Aryl, vorzugsweise gegebenenfalls substituiertes Phenyl und Naphthyl, gegebenenfalls substituiertes $C_1$–$C_4$-Alkyl-, Phenyl-$C_1$–$C_4$-alkyl-, Phenyl- oder Naphthylsulfonyl,

wobei $R_5$ und $R_6$ zusammen auch einen gegebenenfalls durch O oder N unterbrochenen $C_4$–$C_5$-Alkylenrest bedeuten können,

$R_3$ = H, $C_1$–$C_4$-Alkyl, $C_1$–$C_4$-Alkoxy, Cl

$R_1$, $R_2$ = H, Cl, Br, $C_1$–$C_4$-Alkyl, $C_1$–$C_4$-Alkoxy, gegebenenfalls substituiertes Phenoxy, Acylamino, Carboxy, gegebenenfalls substituiertes Carbonamid.

Bevorzugt sind dabei Farbstoffe, die mindestens zwei wasserlöslichmachende Gruppen, insbesondere Sulfo-, Sulfato- oder Carboxygruppen aufweisen.

Als Substituenten für die Alkylreste $R_5$ und $R_6$ kommen insbesondere in Frage: wasserlöslichmachende Gruppen oder hydrophile Gruppen wie: $-SO_3H$, $-OSO_3H$, -COOH, -OH, $C_1$–$C_4$-Alkoxy, gegebenenfalls substituiert beispielsweise durch $C_1$–$C_4$-Hydroxyalkyl oder $C_1$–$C_4$-Alkoxy-$C_1$–$C_4$-alkyl.

Als Substituenten für die Arylreste, insbesondere die Phenylreste kommen beispielsweise in Frage: $-SO_3H$, -COOH weiterhin $C_1$–$C_4$-Alkyl, Halogen, $C_1$–$C_4$-Alkoxy sowie funktionell abgewandelte Sulfo- und Carboxygruppen.

Beispiele für Brückenglieder $Y_2$ sind Alkylenreste wie $C_2$–$C_6$-Alkylen, gegebenenfalls durch O, S oder N unterbrochen, gegebenenfalls substituiert, beispielsweise Ethylen, 1,2- und 1,3-Propylen, 1,2-, 1,3-, 1,4- und 2,3-Butylen, 2-Methyl-1,3-Propylen, 2,2-Dimethylpropylen, 2-Methyl-2,4-pentylen, 1-Phenylethylen, 2,5-Hexylen, 1,5-Pentylen, 1,6-Hexylen, 1,3-Cyclohexylen, 1,4-Cyclohexylen, 4-Methyl-1,3-cyclohexylen, 2-Hydroxy-1,3-propylen, 2-Sulfato-1,3-propylen, $-CH_2CH_2$-O-$CH_2CH_2$-, $CH_2CH_2$-S-$CH_2CH_2$-,

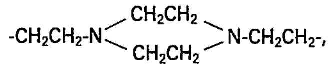, 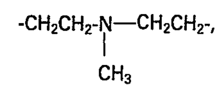,

Alkylenreste wie

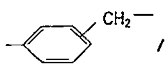 / 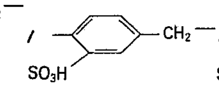 / 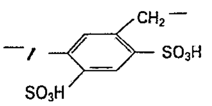 /

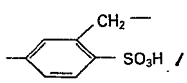 / 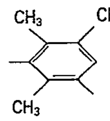 / 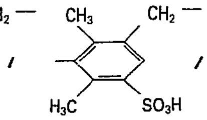 /

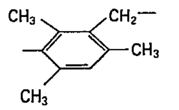 / 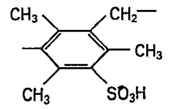 / 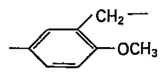 /

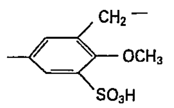 / 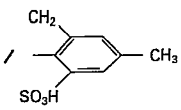 / 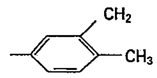 /

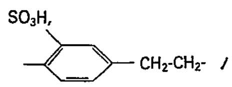 / 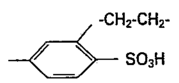 / 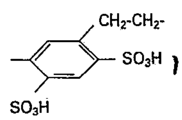

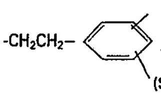 / 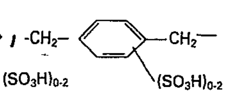 / 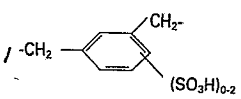

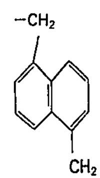 sowie der Rest 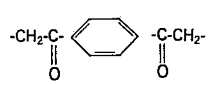

Arylenreste wie gegebenenfalls substituiertes Phenylen, insbesondere Phenylen und durch Alkyl, Alkoxy, Sulfo, Carboxy oder Halogen substituiertes Phenylen wie 1,2-, 1,3-, 1,4-Phenylen, 3-Methyl-1,2-phenylen, 4-Methyl-1,2-phenylen, 2-Methyl-1,3-phenylen, 4-Methyl-1,3-phenylen, 5-Methyl-1,3-phenylen, 2-Methyl-1,4-phenylen, 2,4,6-Trimethyl-1,3-phenylen, 2,3,5,6-Tetramethyl-1,4-phenylen, 2,6-Dimethyl-1,3-phenylen, 2-Methyl-6-ethyl-1,3-phenylen, 2-Methyl-4,6-diethyl-1,3-phenylen, 2,6-Diethyl-4-methyl-1,3-phenylen, 2-Methoxy-1,3-phenylen, 4-Methoxy-1,3-phenylen, 6-Methoxy-1,3-phenylen, 2-Methoxy-1,4-phenylen, 4-Chlor-1,3-phenylen, 2-Chlor-1,4-phenylen, 4-Chlor-1,3-phenylen, 2-Chlor-1,4-phenylen sowie insbesondere die durch 1–2 Sulfonsäuregruppen substituierten genannten Arylenreste wie zum Beispiel 4-Sulfo-1,2-phenylen, 4-Sulfo-1,3-phenylen, 3-Sulfo-1,4-phenylen, 2-Sulfo-1,4-phenylen, 4,6-Disulfo-1,3-phenylen, 2,5-Disulfo-1,4-phenylen, 2-Methyl-5-sulfo-1,3-phenylen, 2-Methyl-4-sulfo-1,3-phenylen, 2,4,6-Trimethyl-5-sulfo-1,3-phenylen, 2,6-Dimethyl-4- und -5-sulfo-1,3-phenylen, 2-Methyl-6-sulfo-1,3-phenylen, 4-Methyl-6-sulfo-1,3-phenylen, 6-Methyl-4-sulfo-1,3-phenylen, 3-Methyl-6-sulfo-1,4-phenylen, 6-Methoxy-4-sulfo-1,3-phenylen, 4-Methoxy-6-sulfo-1,3-phenylen.

Geeignete Reste $R_1$ und $R_2$ sind beispielsweise Cl, Br, $C_1$–$C_4$-Alkyl, $C_1$–$C_4$-Alkoxy, Aryloxy, insbesondere gegebenenfalls substituiertes Phenoxy, Acylamino, Carboxy, gegebenenfalls weitersubstituiertes Carbonamid.

Geeignete Reste $R_3$ sind beispielsweise $C_1$–$C_4$-Alkyl, $C_1$–$C_4$-Alkoxy, Halogen, insbesondere Cl.

Geeignete Reste $R_4$ sind die Reste $R_6$.

Vorzugsweise stehen die Reste $-CON\begin{smallmatrix} R_5 \\ R_6 \end{smallmatrix}$ in o-Stellung zu

$$-NH-Y_4-NH-Z' \text{ bzw. } -\underset{R_5}{N}-Y_2-\underset{R_6}{N}-R_{10}.$$

Vorzugsweise stehen $R_1$ und $R_2$ für Cl und $R_3$ für H.

Geeignete faserreaktive Reste Z', also solche, die unter Färbebedingungen mit hydroxylgruppen- oder amidgruppenhaltigen Materialien unter Ausbildung einer kovalenten Bindung reagieren, sind beispielsweise solche, die mindestens einen abspaltbaren Substituenten an einen heterocyclischen oder an einen aliphatischen Rest gebunden enthalten, insbesondere solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschliesslich Hydrazinium, Sulfonium, Sulfonyl, Azido($N_3$), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlor-

triazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder -Sulfophenyl)-amino-4-chlortriazinyl-6-, 2-(2',4'-2,',5'- oder 3',4'-Disulfophenyl)-amino-4-chlor-triazinyl-6, 2-Alkoxy-4-chlortriazinyl-6-, wie 2-Methoxy- oder -Ethoxy-4-chlortriazinyl-6-, 2-(Phenyl-sulfonylmethoxy)-4-chlortriazinyl-6-, 2-Aryloxy- und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder -Methoxyphenyl)-oxy-4-chlor-triazinyl-6-, 2-Alkylmercapto- oder 2-Arylmercapto- oder 2-(substituiertes Aryl)-mercapto-4-chlortriazinyl-6-, wie 2-β-Hydroxyethylmercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-phenylmercapto-4-chlortriazinyl-6-, 2-Methyl-4-chlortriazinyl-6-, 2-Phenyl-4-chlor-triazinyl-6, 2,4-Difluortriazinyl-6, Monofluortriazinylreste, die durch Amino-, Alkylamino-, Aralkylamino-, Arylaminogruppen substituiert sind, wobei Alkyl, insbesondere gegebenenfalls substituiertes $C_1$–$C_4$-Alkyl, Aralkyl, insbesondere gegebenenfalls substituiertes Phenyl-$C_1$–$C_4$-Alkyl und Aryl, insbesondere gegebenenfalls durch Sulfo-, Alkyl-, insbesondere $C_1$–$C_4$-Alkyl-, Alkoxy-, insbesondere $C_1$–$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluortriazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluortriazinyl-6,
2-β-Sulfoethyl-methylamino-4-fluor-triazinyl-6,
2-Carboxymethylamino-4-fluor-triazinyl-6,
2-β-Cyanethylamino-4-fluor-triazinyl-6,
2-Benzylamino-4-fluor-triazinyl-6,
2-β-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,
2-(N-Methylphenyl)-amino-4-fluor-triazinyl-6,
2-(N-Ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6,
2-Chlor- oder 2-Fluor-4-(4'-β-sulfatoethylsulfonyl-phenylamino)-6-triazinyl, 2-Chlor- oder 2-Fluor-4-(3'-β-sulfatoethylsulfonyl-phenylamino)-6-triazinyl, 2-Chlor- und 2-Fluor-4-(β-(β'-sulfatoethylsulfonyl)-ethylamino)-6-triazinyl, 2-Fluor-4-bis-(β-(β'-chlorethylsulfonyl)-ethyl)-amino-6-triazinyl.

Die Halogentriazinylreste können auch mit einem zweiten Halogentriazinylrest verknüpft sein. Beispiele für derartige Reste sind die folgenden:

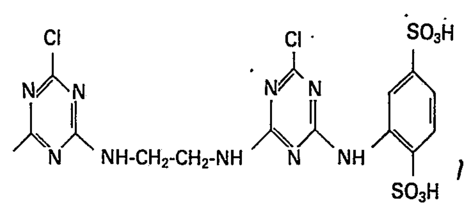
,

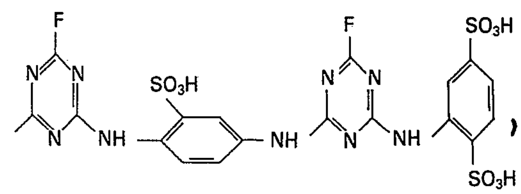
,

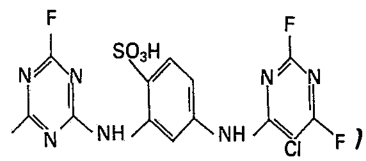
,

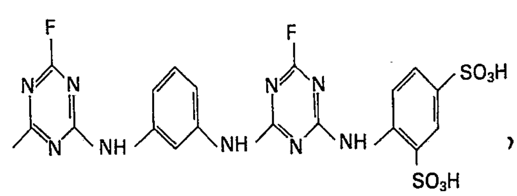
,

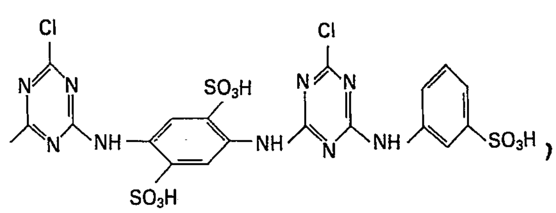
,

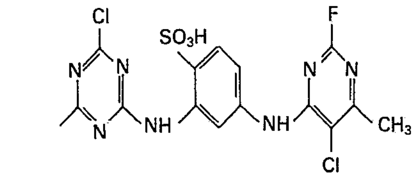
,

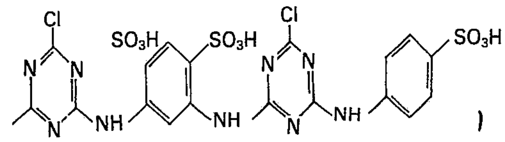
,

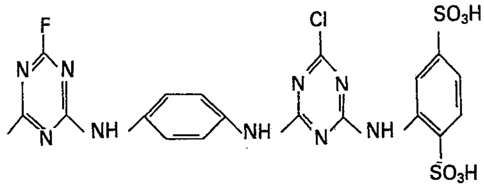
,

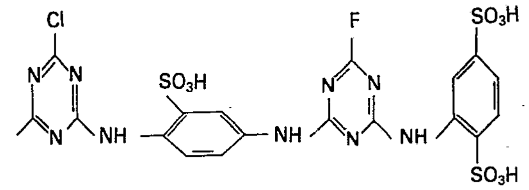
.

Weiterhin können die reaktiven Halogenatome in den oben genannten 2-Halogen-4-substituierten-triazinyl-Resten unter Bildung quartärer Salze noch gegen tertiäre Basen wie Trimethylamin, Triethylamin, Dimethyl-β-hydroxyethylamin, Triethanolamin, N,N-Dimethylhydrazin, Pyridin, α, γ-Picolin, Nicotinsäure oder Isonicotinsäure ausgetauscht werden.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-methyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-fluor-4-dichlormethyl-5-chlorpyrimidin-6-yl-, 2-Fluor-5-chlor-pyrimidin-4-yl, 2-Methyl-4-fluor-5-methylsulfonylpyrimidinyl-6, 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidin-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsufonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsufonyl-6-chlorpyrimidin-4-, und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m-, oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6, ferner 4-Phenylamino- oder 4-(Sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Ethoxy-, oder Aroxy-, wie Phenoxy- oder Sulfophenoxy-Gruppen substituiert sind; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden, im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-cabronyl- oder -4- oder -5-sulfonyl-, N-Oxid des 4-Chlor- oder 4-Nitrochinolin-5-carbonyl.

Im Rahmen der erfindungsgemässen Farbstoffe sind besonders bevorzugt solche mit einem Fluor- oder Chlor-s-triazinylrest, der als weitere Substituenten eine gegebenenfalls durch Alkyl- oder Arylreste, insbesondere gegebenenfalls substituierte Phenylreste, substituierte Aminogruppe aufweist oder solche, die einen Fluor- oder Chlorpyrimidinylrest enthalten.

Farbstoffe der Formel (I) werden beispielsweise in an sich bekannter Weise erhalten durch Umsetzung von Verbindungen der Formeln (I) mit Z′ = H mit Reaktivkomponenten Z′-Halogen, worin Z′ die oben angegebene Bedeutung hat und Halogen F, Cl oder Br ist.

Die Kondensation der Dioxazin-Verbindungen mit der Reaktivkomponente wird entweder in wässrigem oder wässrig-organischen Medium in Abhängigkeit von der eingesetzten Reaktivkomponente bei Temperaturen von 0–80 °C und pH-Werten von 3–9 in Gegenwart alkalischer Kondensationsmittel wie wässriger Alkalihydrogencarbonat-, Alkalicarbonat-, Alkalihydroxid-, Alkalihydrogenphosphat-, Dialkaliahydrogen-phosphat- oder Trialkaliphosphat-Lösung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon, gegebenenfalls in Gegenwart aprotischer organischer Basen wie Trialkylaminen, N,N-Dialkylanilinen, Pyridin oder Alkylpyridinen bei Temperaturen von 0–80 °C vollzogen.

Die Herstellung von Verbindungen (I) mit Z′=H erfolgt nach an sich bekannten Methoden durch Kondensation von 1,4-Benzochinonen der Formel

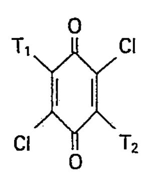

(V)

mit $T_1$ und $T_2$ = H, Cl, Br, O-Alkyl oder O-Aryl mit 5-Amino-2-(substituierten-amino)-benzoesäureamiden der Formel

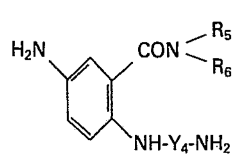

(VI)

zu Verbindungen der Formel

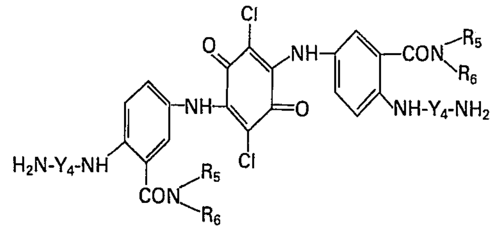

(VII)

und nachfolgenden Ringschluss.

Je nach den beim Ringschluss angewandten Reaktionsbedingungen kann die substituierte Carbonamidgruppe bei den Dioxazinen in den Benzringen des Dioxazinsystems entweder in den o- oder in den p-Stellungen zu den Ringsauerstoffatomen des Dioxazin-Systems auftreten.

Die Herstellung der Verbindungen (IV) erfolgt ganz analog.

Die Kondensation des Benzochinones (V) mit (VI) erfolgt am besten in wässrigem oder wässrigorganischem Medium unter Zugabe alkalischer Kondensationsmittel bei pH-Werten von 3–11, vorzugsweise 4–8, und Temperaturen von 20–90 °C, vorzugsweise 40–70 °C oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte als schwerlösliche, braune Produkte aus.

Die eingesetzten Benzolcarbonsäureamide (VI) sind erhältlich durch stufenweise Kondensation von 2-Chlor-5-nitrobenzolcarbonsäurechlorid mit Ammoniak oder Alkyl- oder Arylaminen und anschliessende katalytische Reduktion der Nitrogruppe.

Eine Variante zur Herstellung von Verbindungen (VII) besteht in der Addition von Aminobenzolcarbonsäureamiden (VI) an 1,4-Benzochinone der Formel

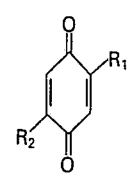

(VIII)

worin $R_1$ und $R_2$ die oben angegebene Bedeutung haben, und der Oxidation der primär entstehenden Addukte.

Der Ringschluss der Chinonkondensationsprodukte kann nach an sich bekannten Methoden, wie sie in den Deutschen Offenlegungsschriften 2122262, 2124080, 2302382, 2344781, 2503611, 2823828 und in der Britischen Patentschrift 2019872 erwähnt sind, insbesondere in konzentrierter Schwefelsäure und vor allem in Oleum mit $SO_3$-Gehalten von 1–50% bei Temperaturen von 10–80 °C gegebenenfalls mit Zusatz von Oxydationsmitteln wie Kalium- oder Ammoniumperoxidisulfat oder organischen Peroxiden vorgenommen werden.

Die neuen Farbstoffe im Nuancenbereich blau sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den für Reaktivfarbstoffe allgemein bekannten und üblichen Verfahren gefärbt oder bedruckt. Man erhält dann licht- und nassechte blaue Färbungen und Drucke.

Bei Temperaturangaben in den Beispielen handelt es sich um °C. Die Formeln der wasserlöslichen Farbstoffe in der Beschreibung und in den Beispielen sind die der freien Säuren. Handelt es sich um Reaktivfarbstoffe, dann werden diese in der Regel in Form ihrer Alkalisalze, insbesondere der Natrium- oder Kaliumsalze, isoliert und angewandt.

In der EP-A-0053743 werden Triphendioxazin-Reaktivfarbstoffe beschrieben, welche die Substituenten-Kombination reaktivgruppenhaltige Sulfonamidgruppe und gegebenenfalls nicht-reaktiv substituierte Aminogruppen aufweisen. Die erfindungsgemässen Farbstoffe werden dadurch nicht nahegelegt.

Beispiel 1

7,5 g 2-Aminobenzolsulfonsäure werden in 90 ml Wasser bei pH 6–7 gelöst. Man stellt den pH-Wert auf 5,0, lässt bei 0–5 °C 4,3 ml Cyanurfluorid in 5 min zutropfen und hält den pH-Wert mit 5%iger Sodalösung auf 4,5–4,7, wobei eine teilweise Ausfällung des Kondensationsproduktes auftritt. Zur Beendigung der Kondensation rührt man den Ansatz noch 15–20 min unter den obigen Bedingungen nach.

11,2 g einer Dioxazincarbonamid-Komponente der Formel

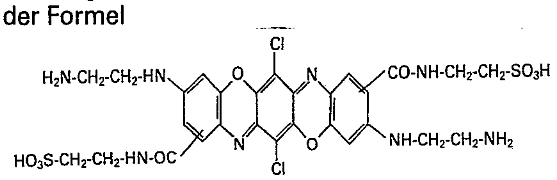

hergestellt durch Kondensation von 5-Amino-2-(β-aminoethylamino)-benzoesäure-(β-sulfoethylamid) mit Chloranil und anschliessenden oxydativen Ringschluss in Oleum, werden in 200 ml Wasser durch Zugabe von 2n Natronlauge bei pH 12 gelöst.

Man trägt nun die Lösung der Farbkomponente bei 0–5 °C in die Suspension der oben hergestellten Reaktivkomponente möglichst zügig so ein, dass sich ein pH-Wert von 8,5–9,0 einstellt und hält diesen pH-Wert weiterhin durch Zutropfen von 1n Natronlauge ein. Man rührt weiter bei 0–5 °C. Die zunächst teilweise ausgefallene Farbkomponente geht mit fortschreitender Umsetzung bald völlig in Lösung.

Nach einigen Stunden lässt man die Temperatur unter ständiger pH-Kontrolle über Nacht auf 20 °C ansteigen, stellt den pH-Wert auf 7,5–8,0 und salzt den erhaltenen Reaktivfarbstoff mit 15–20% Natriumchlorid aus. Die erhaltene Fällung saugt man ab, wäscht den Filterkuchen mit Natriumchloridlösung und trocknet ihn nach Zusatz von Phosphaten als Puffer bei 50 °C im Vakuumschrank. Eine alternative Aufarbeitungsmethode besteht darin, die Farbstofflösung nach Zusatz von Phosphatpuffern im Rotationsverdampfer zur Trockne einzudampfen. In jedem Falle wird ein blaues Pulver erhalten, dessen färbende Substanz das Natriumsalz des Farbstoffs folgender Formel ist

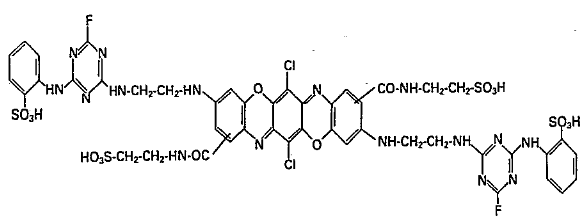

Der Farbstoff färbt und bedruckt Cellulosefasern nach den bekannten Färbe- und Drucktechniken in klaren, kräftigen Blautönen.

Die nachfolgende Zusammenstellung zeigt Dioxazincarbonamid-Komponenten, aus denen sich mit den angegebenen Reaktivkomponenten weitere, Cellulosefasern kräftig blau färbende und druckende Reaktivfarbstoffe herstellen lassen, wobei die Zahl der einsetzbaren Reaktivkomponenten nicht auf die angegebenen Beispiele begrenzt ist.

| Dioxazincarbonamid-Komponente | Reaktivkomponente |
| --- | --- |
| 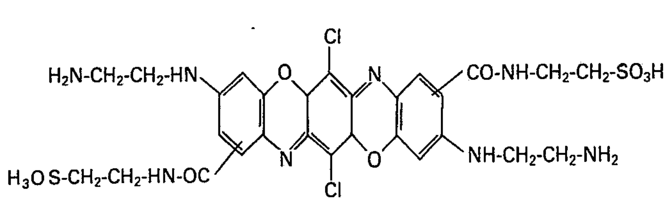 | 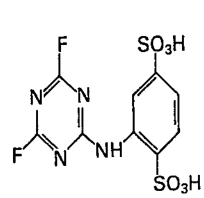 |

| Dioxazincarbonamid-Komponente | Reaktivkomponente |
|---|---|
| 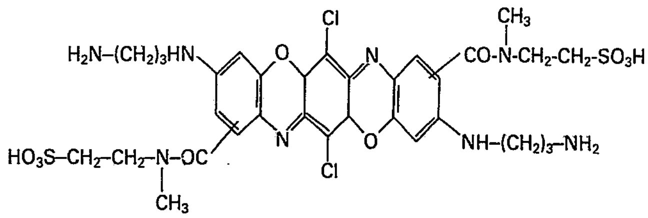 | 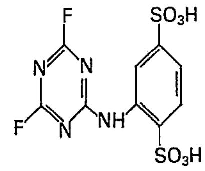 |
| 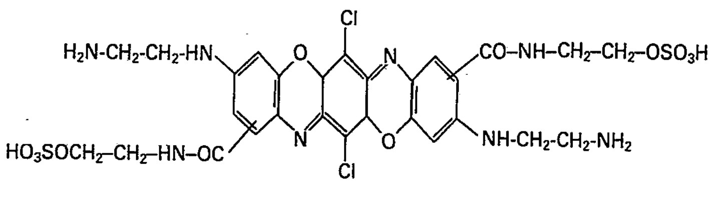 | 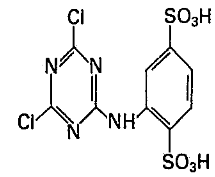 |
| 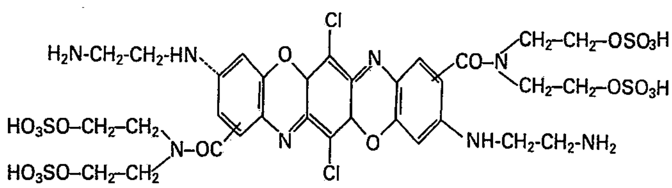 | 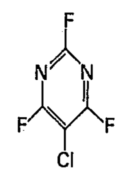 |
| 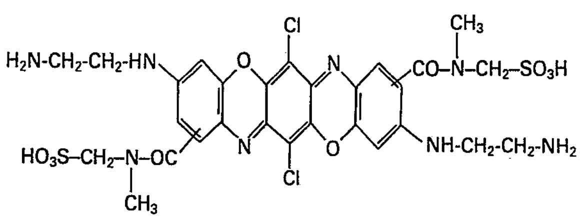 | 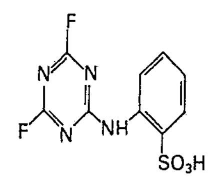 |
| 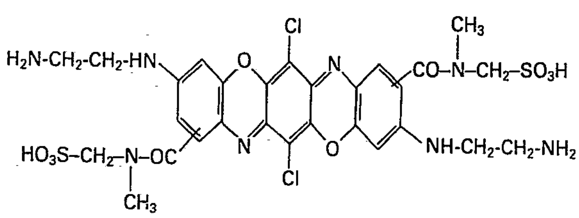 | 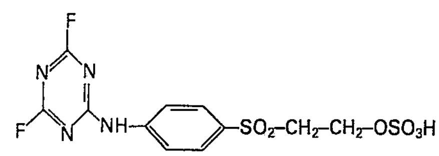 |
| 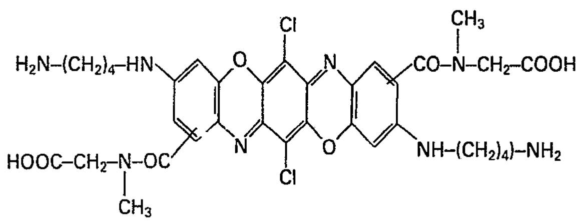 | 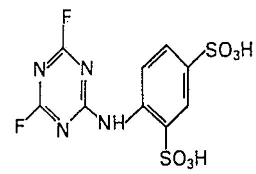 |
| 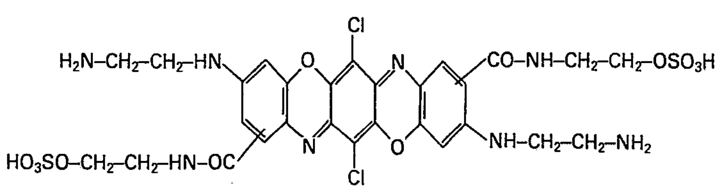 | 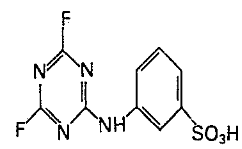 |

| Dioxazincarbonamid-Komponente | Reaktivkomponente |
|---|---|
| 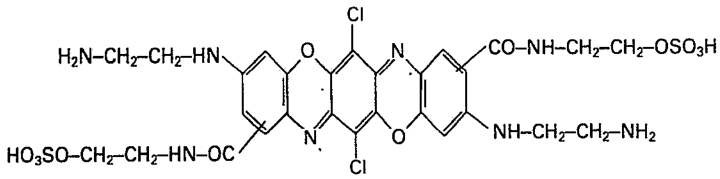 | 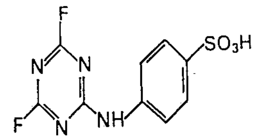 |
| 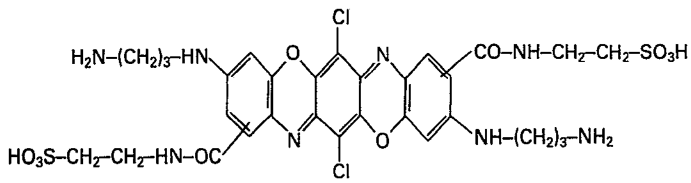 | 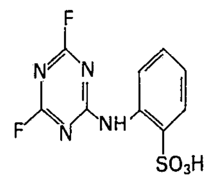 |
| 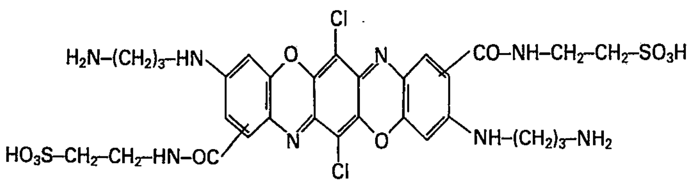 | 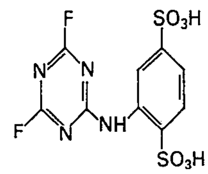 |
| 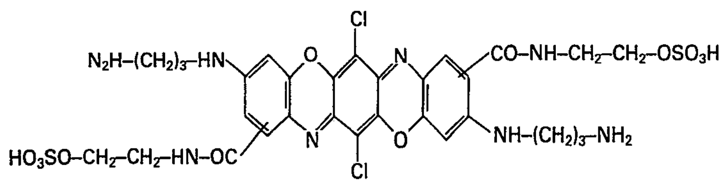 | 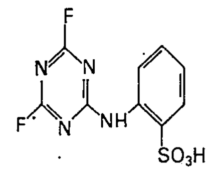 |
| 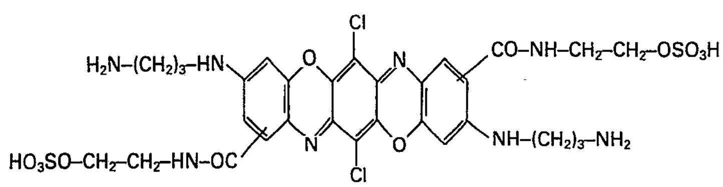 | 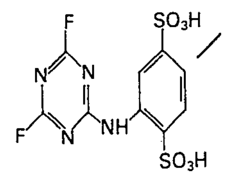 |
| 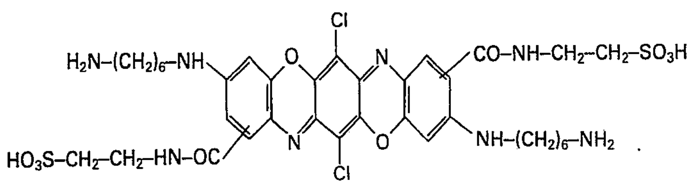 | 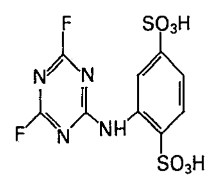 |
| 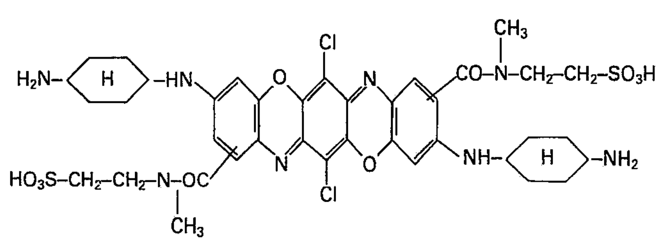 | 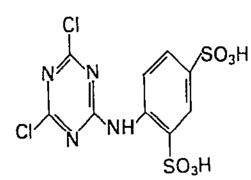 |
| 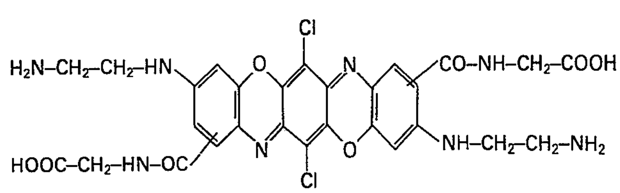 | 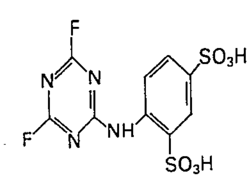 |

| Dioxazincarbonamid-Komponente | Reaktivkomponente |
|---|---|
| 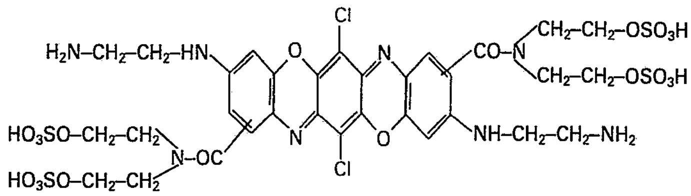 | 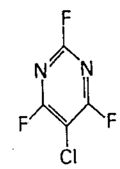 |
| 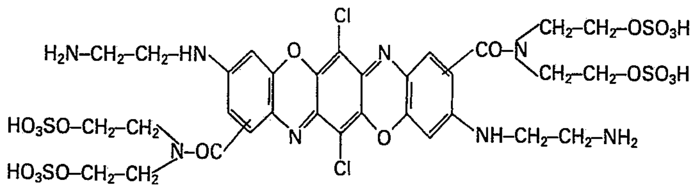 | 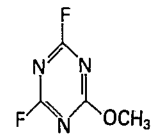 |
| 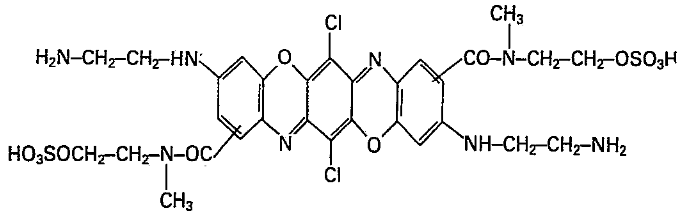 | 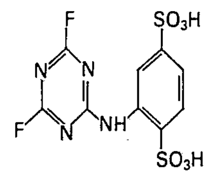 |
| 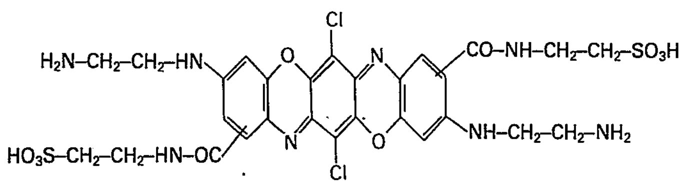 | 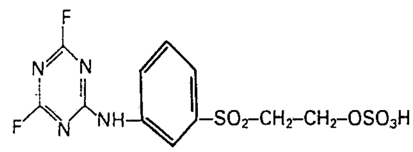 |
| 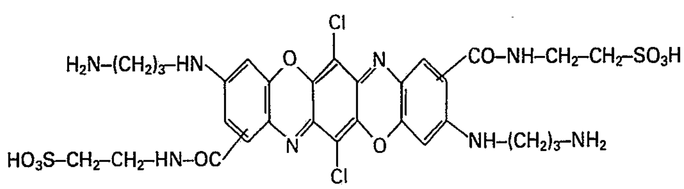 | 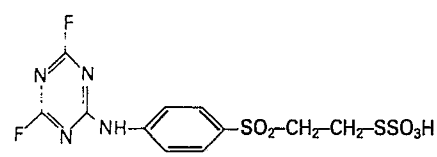 |
| 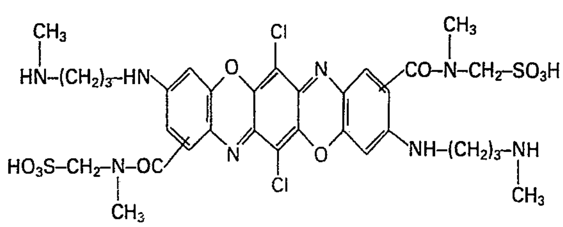 | 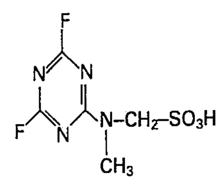 |
| 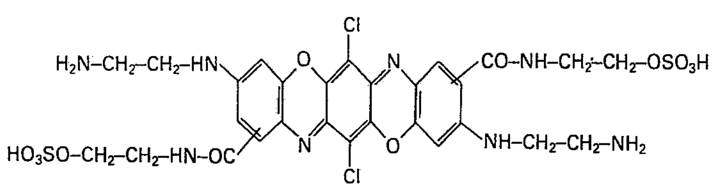 | 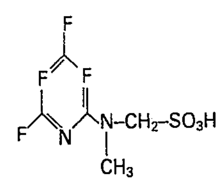 |
| 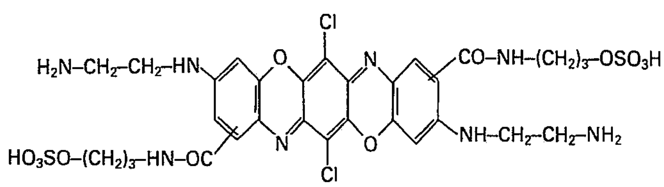 | 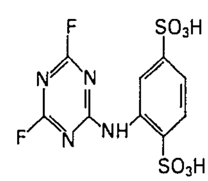 |

| Dioxazincarbonamid-Komponente | Reaktivkomponente |
| --- | --- |
| 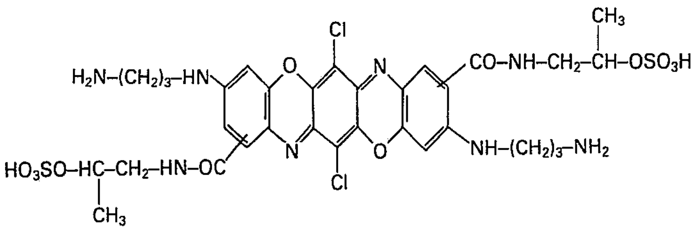 | 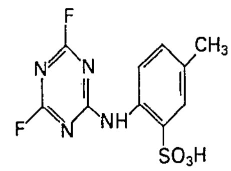 |
| 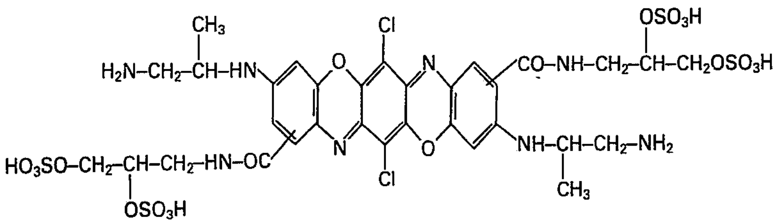 | 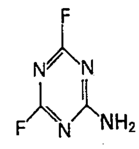 |
| 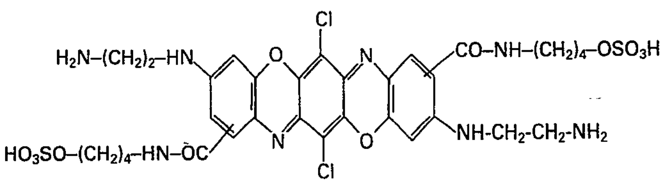 | 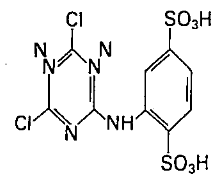 |
| 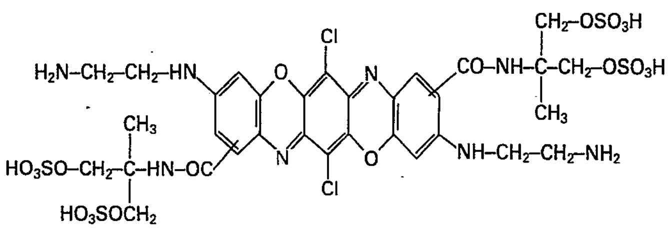 | 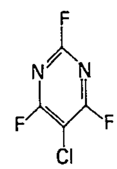 |
| 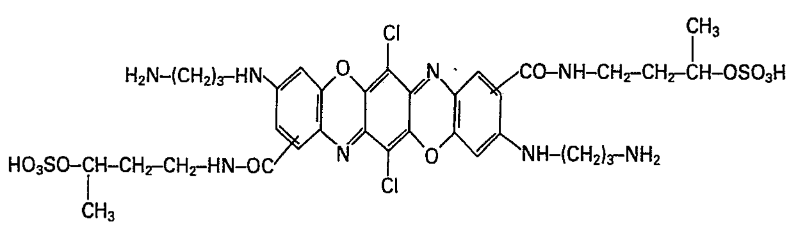 | 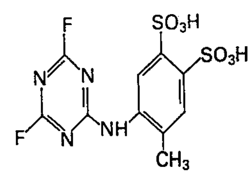 |
| 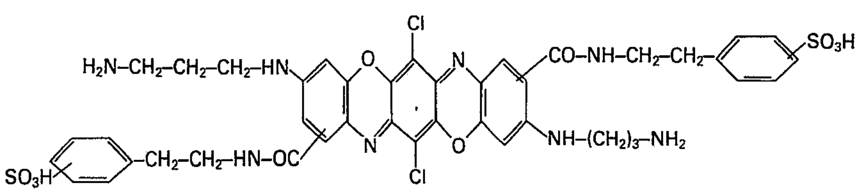 | 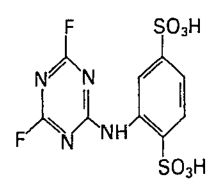 |
| 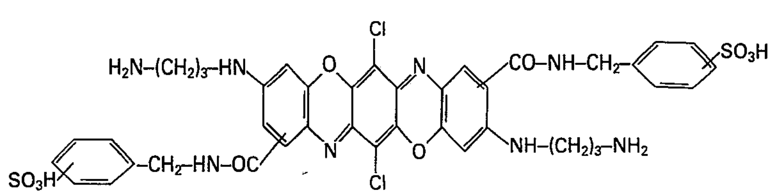 | 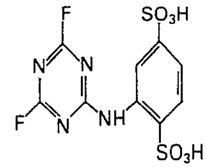 |

Beispiel 2

Setzt man anstelle der in Beispiel 1 beschriebenen Tauridverbindung 16,4 g eines Dioxazincarbonamids der Formel

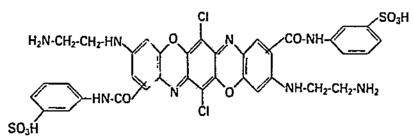

gelöst bei pH = 12 in 400 ml Wasser ein und unterwirft diese Lösung einer Kondensation mit Difluortriazinylamino-benzol-1,4-disulfonsäure, die aus 14,4 g 2-Aminobenzol-1,4-disulfonsäure und 5,7 ml Cyanurfluorid in der im Beispiel 1 beschriebenen Weise hergestellt war, so erhält man nach Aufarbeitung und Trocknen einen Farbstoff der Formel

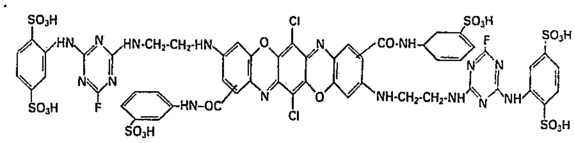

der auf Baumwolle und Zellwolle nach den für Reaktivfarbstoffe gängigen Applikationstechniken klare blaue Färbungen und Drucke ergibt.

Weitere ähnliche Farbstoffe werden erhalten durch Umsetzung der in der folgenden Zusammenstellung wiedergegebenen Dioxazincarbonamid-Komponenten und Reaktivkomponenten.

| Dioxazincarbonamid-Komponente | Reaktivkomponente |
|---|---|
| 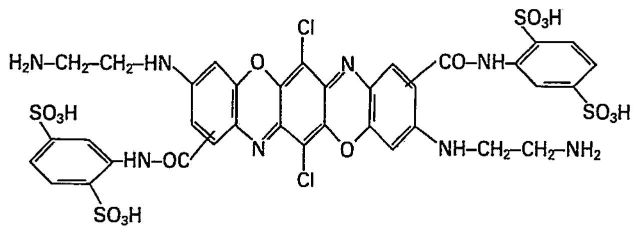 | 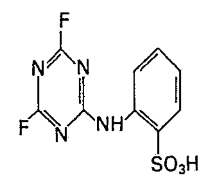 |
| 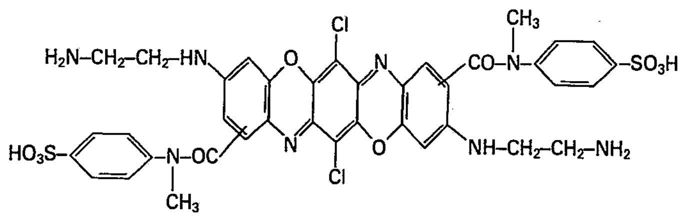 | 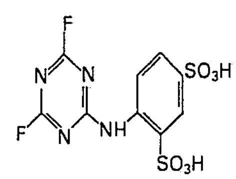 |
| 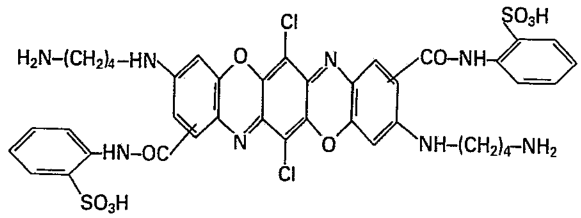 | 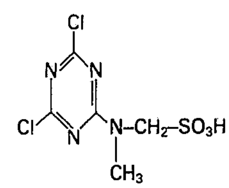 |
| 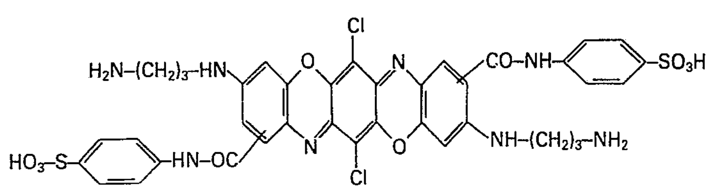 | 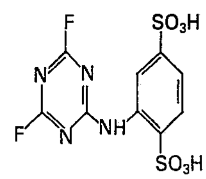 |

**Patentansprüche**

1. Farbstoffe der Formel

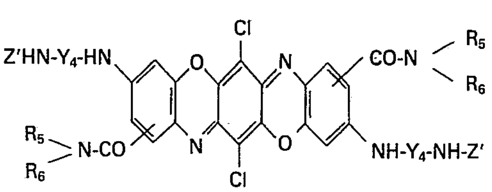

worin

$Y_4$ = gegebenenfalls substituiertes $C_2$–$C_6$-Alkylen, Cyclohexylen

Z' = heterocyclischer faserreaktiver Rest

$R_5$ = H, gegebenenfalls substituiertes $C_1$–$C_6$-Alkyl,

$R_6$ = H, gegebenenfalls substituiertes $C_1$–$C_6$-Alkyl, $C_5$–$C_6$-Cycloalkyl, gegebenenfalls substituiertes Phenyl-$C_1$–$C_4$-alkyl, gegebenenfalls substituiertes Aryl, vorzugsweise gegebenenfalls substituiertes Phenyl und Naphthyl, gegebenenfalls substituiertes $C_1$–$C_4$-Alkyl-, Phenyl-$C_1$–$C_4$-alkyl-, Phenyl- oder Naphthylsulfonyl,
wobei $R_5$ und $R_6$ zusammen auch einen gegebenenfalls durch O oder N unterbrochenen $C_4$–$C_5$-Alkylenrest bedeuten können.

2. Farbstoffe des Anspruchs 1 der Formel

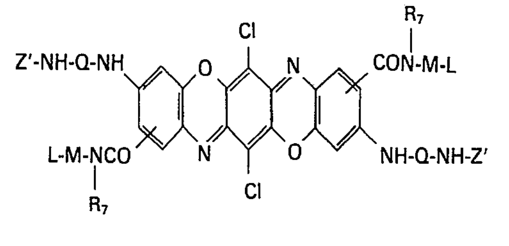

worin
$R_7$ = H, $-CH_3$, $-CH_2-CH_2-SO_3H$, $-CH_2-CH_2-OSO_3H$, $-CH_2-CH_2OH$, $-CH_2-COOH$
M = $C_1$–$C_6$-Alkylen
L = $SO_3H$, $OSO_3H$, OH, COOH
Q = $C_2$–$C_6$-Alkylen.

3. Farbstoffe des Anspruchs 1 der Formel

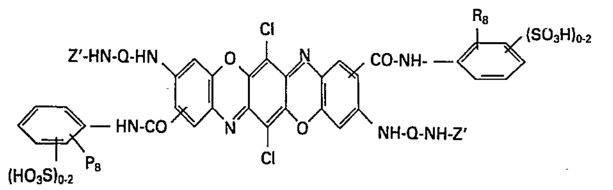

worin
$R_8$ = H, $CH_3$, Cl, $OCH_3$.

4. Verwendung der Farbstoffe der Ansprüche 1–3 zum Färben natürlicher und synthetischer hydroxyl- oder amidgruppenhaltiger Materialien.

5. Mit den Farbstoffen der Ansprüche 1–3 gefärbte natürliche oder synthetische hydroxyl- oder amidgruppenhaltige Materialien.

6. Reaktivgruppenfreie Farbstoffe der Formel

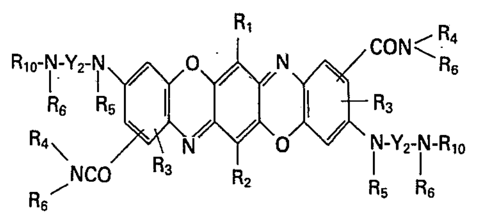

worin
$R_{10}$ = H oder Rest einer Reaktivgruppen-freien Sulfonsäure oder Carbonsäure
$Y_2$ = Brückenglied
$R_4$ = $R_6$
$R_5$ = H, gegebenenfalls substituiertes $C_1$–$C_6$-Alkyl,
$R_6$ = H, gegebenenfalls substituiertes $C_1$–$C_6$-Alkyl, $C_5$–$C_6$-Cycloalkyl, gegebenenfalls substituiertes Phenyl-$C_1$–$C_4$-alkyl, gegebenenfalls substituiertes Aryl, vorzugsweise gegebenenfalls substituiertes Phenyl und Naphthyl, gegebenenfalls substituiertes $C_1$–$C_4$-Alkyl-, Phenyl-$C_1$–$C_4$-Alkyl-, Phenyl- oder Naphthylsulfonyl,
wobei $R_5$ und $R_6$ zusammen auch einen gegebenenfalls durch O oder N unterbrochenen $C_4$–$C_5$-Alkylenrest bedeuten können,
$R_3$ = H, $C_1$–$C_4$-Alkyl, $C_1$–$C_4$-Alkoxy, Cl
$R_1$, $R_2$ = H, Cl, Br, $C_1$–$C_4$-Alkyl, $C_1$–$C_4$-Alkoxy, gegebenenfalls substituiertes Phenoxy, Acylamino, Carboxy, gegebenenfalls substituiertes Carbonamid.

**Claims**

1. Dyestuffs of the formula

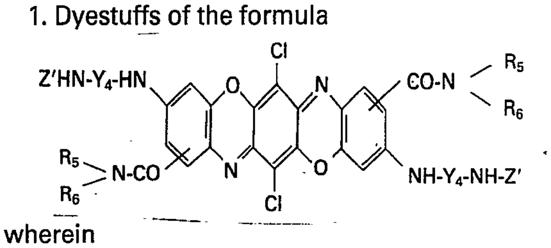

wherein
$Y_4$ = optionally substituted $C_2$–$C_6$-alkylene or cyclohexylene,
Z' = a heterocyclic fibre-reactive radical,
$R_5$ = H or optionally substituted $C_1$–$C_6$-alkyl, and
$R_6$ = H, optionally substituted $C_1$–$C_6$-alkyl, $C_5$–$C_6$-cycloalkyl, optionally substituted phenyl-$C_1$–$C_4$-alkyl, optionally substituted aryl, preferably optionally substituted phenyl or naphthyl, or optionally substituted $C_1$–$C_4$-alkyl-, phenyl-$C_1$–$C_4$-alkyl-, phenyl- or naphthylsulphonyl,
wherein
$R_5$ and $R_6$ together can also denote a $C_4$–$C_5$-alkylene radical which is optionally interrupted by O or N.

2. Dyestuffs of claim 1, of the formula

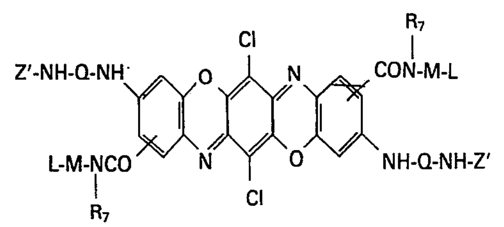

wherein
$R_7$ = H, $-CH_3$, $-CH_2-CH_2-SO_3H$, $-CH_2-CH_2-OSO_3H$, $-CH_2-CH_2OH$ or $-CH_2-COOH$.
M = $C_1$–$C_6$-alkylene,
L = $SO_3H$, $OSO_3H$, OH or COOH, and
Q = $C_2$–$C_6$-alkylene.

3. Dyestuffs of claim 1, of the formula

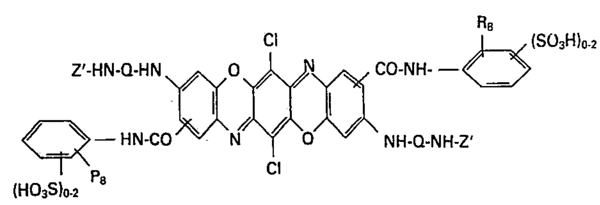

wherein
$R_8$ = H, $CH_3$, Cl, or $OCH_3$.

4. Use of the dyestuffs of claims 1–3 for dyeing natural or synthetic materials containing hydroxyl groups or amide groups.

5. Natural or synthetic materials containing hydroxyl groups or amide groups, dyed with the dyestuffs of claims 1–3.

6. Dyestuffs which are free from reactive groups, of the formula

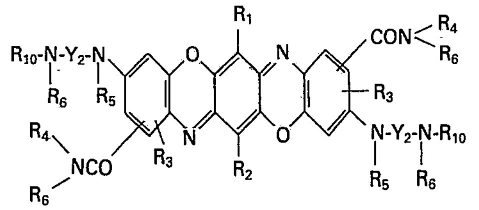

wherein

$R_{10}$ = H or the radical of a sulphonic acid or carboxylic acid which is free from reactive groups,

$Y_2$ = a bridge member,

$R_4 = R_6$

$R_5$ = H or optionally substituted $C_1$–$C_6$-alkyl and

$R_6$ = H, optionally substituted $C_1$–$C_6$-alkyl, $C_5$–$C_6$-cycloalkyl, optionally substituted phenyl-$C_1$–$C_4$-alkyl, optionally substituted aryl, preferably optionally substituted phenyl or naphthyl, or optionally substituted $C_1$–$C_4$-alkyl-, phenyl-$C_1$–$C_4$-alkyl-, phenyl- or naphthylsulphonyl,

wherein

$R_5$ and $R_6$ together can also denote a $C_4$–$C_5$-alkylene radical which is optionally interrupted by O or N

$R_3$ = H, $C_1$–$C_4$-alkyl, $C_1$–$C_4$-alkoxy, or Cl, and

$R_1$, $R_2$ = H, Cl, Br, $C_1$–$C_4$-alkyl, $C_1$–$C_4$-alkoxy, optionally substituted phenoxy, acylamino, carboxyl or optionally substituted carboxamide.

**Revendications**

1. Colorants de formule

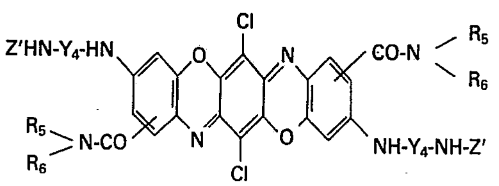

dans laquelle

$Y_4$ est un groupe alkylène en $C_2$ à $C_6$ éventuellement substitué, un groupe cyclohexylène

Z' est un reste hétérocyclique réactif envers la fibre

$R_5$ représente H, un groupe alkyle en $C_1$ à $C_6$ éventuellement substitué

$R_6$ représente H, un groupe alkyle en $C_1$ à $C_6$ éventuellement substitué, cycloalkyle en $C_5$ ou $C_6$, phényl-(alkyle en $C_1$ à $C_4$) éventuellement substitué, aryle éventuellement substitué, de préférence un groupe phényle et un groupe naphthyle éventuellement substitués, un groupe (alkyle en $C_1$ à $C_4$)-, phényl-(alkyle en $C_1$ à $C_4$)-, phényl- ou naphthylsulfonyle éventuellement substitué,

$R_5$ et $R_6$ pouvant aussi constituer ensemble un reste alkylène en $C_4$ ou $C_5$ éventuellement interrompu par de l'oxygène ou de l'azote.

2. Colorants suivant la revendication 1, de formule

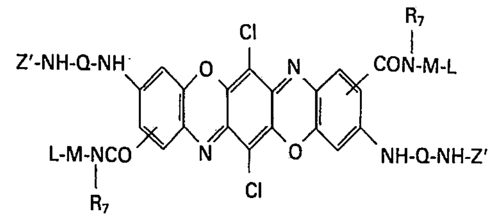

dans laquelle

$R_7$ représente H, $-CH_3$, $-CH_2-CH_2-SO_3H$, $-CH_2CH_2-OSO_3H$, $-CH_2-CH_2OH$, $-CH_2-COOH$

M = alkylène en $C_1$ à $C_6$

L = $SO_3H$, $OSO_3H$, OH, COOH

Q = alkylène en $C_2$ à $C_6$.

3. Colorants suivant la revendication 1, de formule

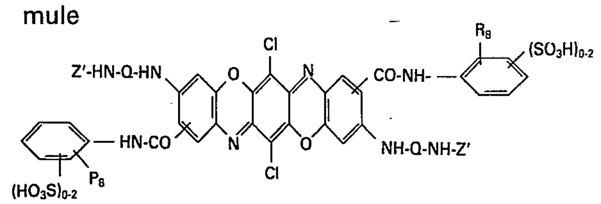

dans laquelle

$R_8$ = H, $CH_3$, Cl, $OCH_3$.

4. Utilisation des colorants suivant les revendications 1 à 3 pour la teinture de matières naturelles et synthétiques portant des groupes hydroxyle ou des groupes amido.

5. Matières naturelles ou synthétiques portant des groupes hydroxyle ou amido, teintes avec les colorants suivant les revendications 1 à 3.

6. Colorants dépourvus de groupes réactifs, de formule

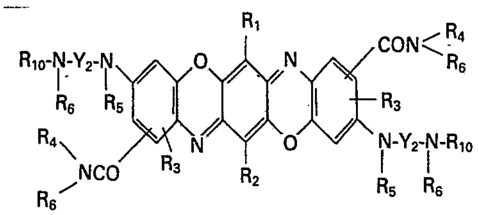

dans laquelle

$R_{10}$ = H ou reste d'un acide sulfonique ou carboxylique dépourvu de groupes réactifs

$Y_2$ = élément de pontage

$R_4 = R_6$

$R_5$ = H, groupe alkyle en $C_1$ à $C_6$ éventuellement substitué,

$R_6$ = H, alkyle en $C_1$ à $C_6$ éventuellement substitué, cycloalkyle en $C_5$ ou $C_6$, phényl-(alkyle en $C_1$ à $C_4$) éventuellement substitué, aryle éventuellement substitué, phényle et naphthyle de préférence éventuellement substitués, (alkyle en $C_1$ à $C_4$)-, phényl-(alkyle en $C_1$ à $C_4$)-, phényl- ou naphthylsulfonyle éventuellement substitué,

$R_5$ et $R_6$ pouvant aussi former ensemble un reste alkylène en $C_4$ ou $C_5$ éventuellement interrompu par O ou N,

$R_3$ = H, alkyle en $C_1$ à $C_4$, alkoxy en $C_1$ à $C_4$, Cl

$R_1$, $R_2$ = H, Cl, Br, alkyle en $C_1$ à $C_4$, alkoxy en $C_1$ à $C_4$, phénoxy éventuellement substitué, acylamino, carboxy, carboxamido éventuellement substitué.